# EUROPÄISCHE PATENTSCHRIFT

(11) **EP 2 811 233 B1**
(45) Veröffentlichungstag und Bekanntmachung des Hinweises auf die Patenterteilung: **13.07.2022**
(21) Anmeldenummer: 14001534.8
(22) Anmeldetag: 29.04.2014
(51) Int. Cl.: F24D 17/00, H05B 1/02, F28D 20/00, H02S 40/44

(54) **EINRICHTUNG MIT ELEKTRISCH BEHEIZTEM WÄRMESPEICHER ZUR WARMWASSERBEREITUNG**
DEVICE WITH ELECTRICALLY HEATED HEAT STORAGE FOR HOT WATER PRODUCTION
DISPOSITIF DOTÉ D'UN ACCUMULATEUR DE CHALEUR ÉLECTRIQUE DESTINÉ À LA PRÉPARATION D'EAU CHAUDE

(30) Priorität: 29.04.2013 DE 102013007246
(43) Veröffentlichungstag der Anmeldung: 10.12.2014
(73) Patentinhaber: Aschauer, Johann, Dipl.-Ing. Mag., 4362 Bad Kreuzen (AT)
(72) Erfinder: Aschauer, Johann, Dipl.-Ing. Mag., 4362 Bad Kreuzen (AT)
(74) Vertreter: Hübscher & Partner Patentanwälte GmbH

(56) Entgegenhaltungen:
- WO-A2-2011/073938
- CH-A1- 704 462
- DE-A1- 19 539 704
- DE-U1-202010 008 307
- DE-U1-202012 011 625
- US-A- 4 200 783
- US-A1- 2009 214 195

## Beschreibung

Die Erfindung betrifft eine Einrichtung mit elektrisch beheizten Wärmespeichern zur Warmwasserbereitung in Gebäuden, mit den Merkmalen des Oberbergriffs des Anspruchs 1.

Es ist bekannt, Wärmespeicher zur Warmwasserbereitung in Gebäuden mit elektrischer Energie zu beheizen, wobei je nach Aufbau und Größe ein oder mehrere Heizstäbe eingebaut sind, die von einem Netz, gewöhnlich mit 230 Volt Wechselspannung gespeist werden.

Es ist auch bekannt, Wärmespeicher zur Warmwasserbereitung in Gebäuden mit elektrischer Energie zu speisen, die aus einer Solarzellenvorrichtung mit elektrischen Zuleitungen zugeführt wird, wobei der Gleichstrom mit Niederspannung bei 90 bis 110 Volt begrenzt ist, bei der kein Personenschutz vorgesehen sein muss.

Bekannt ist auch, Wärmespeicher zur Warmwasserbereitung in Gebäuden mit elektrischer Energie sowohl aus dem Netz, als auch aus einer Solarzellenvorrichtung zu versorgen, was in getrennten Schaltkreisen und/oder in gemeinsamen umschaltbaren Schaltkreisen erfolgen kann. Dies erfordert zusätzliche Steuerungs- und Schalt- und Schutzeinrichtungen für den störungsfreien Betrieb.

Aus der US 2009/0214195 A1 ist eine Einrichtung zur Warmwasserbereitung bekannt, die einen ersten Warmwasserspeicher und einen nachgeordneten zweiten Warmwasserspeicher umfasst, die beide je nach Betriebszustand alternativ oder gleichzeitig, durch eine Regeleinrichtung geregelt, von einer Solarvorrichtung mit Gleichstrom gespeist werden.

Zusätzlich wird, wenn erforderlich, zusätzliche Energie vom Stromnetz in den zweiten Warmwasserspeicher geleitet, wobei eine Heizstabanordnung beschrieben ist, die an beide Netze angeschlossen ist. Hydraulisch sind die beiden Warmwasserspeicher mit einer Wasserzuleitung verbunden, und die Kaltwasserleitung ist an den ersten und die Warmwasserleitung an den zweiten Warmwasserspeicher angeschlossen; ein Wärmekreislauf findet nicht statt.

Ziel der Erfindung ist, die Schaffung einer Einrichtung zur Warmwasserbereitung in Gebäuden, die Solarenergie ausnützt, deren Einrichtung mit geringem Aufwand verbunden ist, die einfach aufgebaut ist und auch bei bestehenden Anlagen zur Warmwasserbereitung angebracht werden kann.

Ein weiteres Ziel ist es, Wärmespeicherkörper anderer Art verfügbar zu machen und diese und Erwärmungsvorrichtungen anderer Art miteinander kombiniert anzuwenden.

Diese Aufgabe wird bei einer Einrichtung der eingangs genannten Art nach dem Oberbegriff des Anspruchs 1, mit den Merkmalen des kennzeichnenden Teiles des Anspruchs 1 gelöst.

Die Unteransprüche betreffen besonders vorteilhafte Ausgestaltungen der Erfindung, die Fortbildungen zur Erzielung besonders wirksamer Anordnungen zum Gegenstand haben.

Damit ist es möglich den Wärmespeicher mit Sonnenenergie, die von Solarzellen aus Einheiten mit niedriger elektrischer Arbeitsspannung dargeboten wird, mit Niederspannungsleitungen auf Heizstäbe zu übertragen. Dadurch besteht die Möglichkeit, den nachgeschalteten Warmwasserspeicher mit wenigstens einem Heizstab an das 230 V AC-Netz anzuschließen.

Es kann dadurch die Warmwasserbereitung mit dem nachgeordneten Warmwasserspeicher ergänzt werden, der dann an das 30 V AC-Netz angeschlossen ist.

Der Nutzeffekt der Warmwasserbereitung mit Solarstrom ist dann besonders günstig, wenn keine elektrischen Vorrichtungen zwischengeschaltet sind, mit Ausnahme eines Überspannungsschutzes, mit dem die Gleichspannung auf 90V bis 110V begrenzt wird.

Erforderlich ist eine Schaltvorrichtung zur Regelung zwecks Begrenzung der Temperatur, gesteuert mit einem Warmwasserthermostat und eine weitere Schaltvorrichtung zur Einstellung der maximalen Warmwassertemperatur.

Mit beiden Schaltvorrichtungen wird auch der Netzstrom des Heizstabs des nachgeordneten Warmwasserspeichers geregelt, was allgemein bekannt ist.

Die Solarzellenvorrichtung ist an der Gebäudeaußenwand angebracht und die elektrische Zuleitung der Solarenergie ist sehr einfach herzustellen und mit geringeren Verlusten behaftet als Leitung von Warmwasser; dazu kommt der geringere Sachaufwand.

Ein Gebäude kann dabei ein festgefügtes Bauwerk oder etwa ein Glashaus oder sogar ein Zelt oder dergleichen sein.

Bei der Anwendung von zwei Warmwasserspeichern ist wie beschrieben die elektrische Trennung sehr einfach.

Bei günstiger räumlicher Anordnung der beiden Warmwasserspeicher so, dass der erste mit Solarstrom beheizte Warmwasserspeicher unterhalb des nachgeordneten mit Netzstrom auf Endtemperatur gebrachten zweiten Warmwasserspeichers, ist es vorgesehen, den ersten Warmwasserspeicher vorteilhaft kleiner auszulegen und für die kontinuierliche Aufladung des zweiten Warmwasserspeichers eine Wasserzuleitung zwischen beiden anzubringen und zusätzlich eine Wasserumlaufleitung, wodurch die Aufladung nicht nur bei Warmwasserentnahme erfolgen kann.

Es ist aber erforderlich in letztere ein Rückschlagventil einzubauen, das nach oben schließt, wenn Warmwasser oben entnommen und unten Kaltwasser zugespeist wird.

Eine Ausbildungsform der Erfindung besteht darin, dass der Wärmespeicher von einem Wärmespeicherkörper gebildet wird, der etwa aus einem Estrichboden oder aus einer Raumwand des Gebäudes besteht in dem die elektrische Heizung verlegt ist, die von der Solarzellenvorrichtung über elektrische Leitungen mit

Gleichstrom gespeist wird und in dem ein Warmwasserrohrregister eingebaut ist.

Es kann dem ersten Warmwasserspeicher oder dem Warmwasserrohrregister als Wärmespeicher oder dem nachgeordneten Warmwasserspeicher ein Durchlauferhitzer zur Warmwasserabgabe nachgeschaltet sein, der mit Netzstrom oder mit einer anderen Heizenergie, wie Gas, gespeist ist.

Zur Vergrößerung der Energieausbeute bei der Herstellung von Warmwasser kann auch ein Peltierelement verwendet werden, das außen etwa an dem nachgeordneten Warmwasserspeicher oder am Warmwasserrohrregister angebracht ist und insbesondere mit Raumluft beaufschlagwird oder es kann an einen festen oder flüssigen Wärmespeicher thermisch angekoppelt sein.

Der Solarstrom kann direkt oder nach Speicherung mit einem elektrochemischen Speicher zugeführt werden.

Der Warmwasserspeicher und/oder das Warmwasserrohrregister und/oder der nachgeordnete Warmwasserspeicher und/oder der elektrische Durchlauferhitzer ist mit einem Warmwasserthermostat versehen, der die Einspeisung der elektrischen Energie von der Solarzellenvorrichtung und aus dem Netz regelt. Ausführungsbeispiele der Erfindung werden nachstehend an Hand der Zeichnung beschrieben.

Es zeigen:
Fig. 1 eine Einrichtung mit einem Warmwasserspeicher mit einem ersten Heizstab, gespeist von einer Solarzellenvorrichtung und einen zweiten Heizstab, gespeist vom Netzstrom, mit Schaltrelais,
gesteuert von Wassertemperaturregier und Warmwasserthermostat, schematisch, die an sich bekannt ist;
Fig. 2 eine Einrichtung mit einem Warmwasserspeicher der mit Netzstrom versorgt wird, dem ein erster Warmwasserspeicher vorgeschaltet ist, der mit Strom aus einer Solarzellenvorrichtung gespeist wird, schematisch; Fig. 3 eine Einrichtung mit einem Warmwasserspeicher der mit Netzstrom versorgt wird, dem ein Warmwasserregister in einem Estrichhoden vorgeschaltet ist, der mit einer Heizung erwärmt wird, der mit Strom aus einer Solarzellenvorrichtung gespeist ist, schematisch;
Fig. 4 eine Einrichtung mit einem Warmwasserspeicher der mit Netzstrom versorgt wird, dem ein Warmwasserregister in einer Wand vorgeschaltet ist, die mit einer Heizung erwärmt wird, die mit Strom aus einer Solarzellenvorrichtung gespeist ist, schematisch.

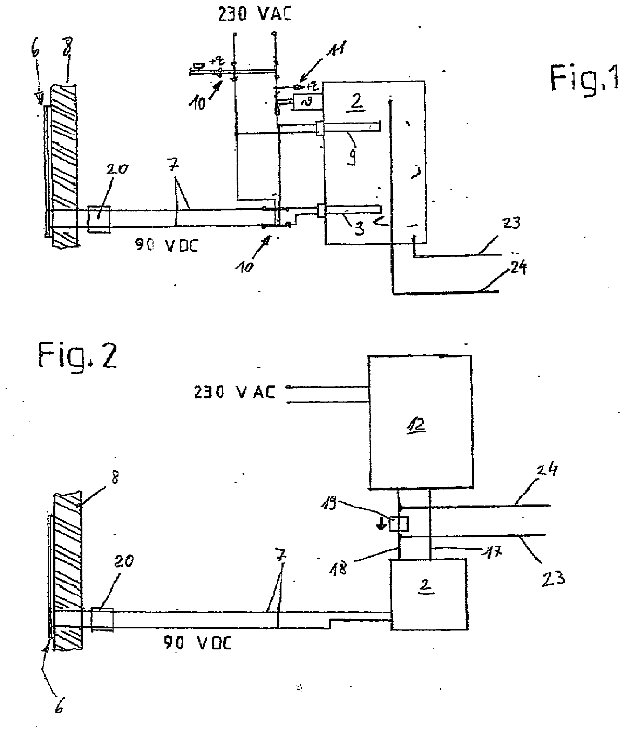

In Fig. 1 ist eine Einrichtung zur Warmwasserbereitung in Gebäuden dargestellt, die an sich bekannt ist, bei der ein Warmwasserspeicher 2 verwendet wird.

Eine Solarzellenvorrichtung 6 ist an der Außenwand 8 eines Gebäudes angebracht und die elektrische Solarenergie wird über Zuleitungen 7 mit einer Gleichspannung von 90V bis 110V DC direkt an einen Heizstab 3 abgegeben, der im Warmwasser-speicher 2 unten liegt und damit die Grundlastdeckung ermöglicht. Zur Enderwärmung wird ein oben liegender Heizstab 9 mit Netzstrom von 230 V AC versorgt.

Das Kaltwasser wird über eine Kaltwasserleitung 23 zugeführt und mit einer Warmwasserleitung 24 entnommen.

Die elektrischen Zuleitungen 7 des Solarstroms sind mit einem Überspannungsschutz abgesichert.

Eine Schaltvorrichtung 10 im 230 V AC Kreis angeschlossen, regelt die einstellbar die Warmwassertemperatur durch ab- oder zuschalten von Solarstrom über ein Relais und des Netzstroms.

Die maximale Warmwassertemperatur wird über einen Warmwasserthermostat am Warmwasserspeicher 2 begrenzt.

In den folgenden Darstellungen von Ausführungsformen der Erfindung sind die Regel- und Steuervorrichtungen gleich und deshalb nicht wiedergegeben.

Fig. 2 zeigt eine Ausführungsform mit zwei Warmwasserspeichern 2 und 12, von denen der erste Warmwasserspeicher 2, über Zuleitungen 7 von der Solarzellenvorrichtung 6 an der Gebäudeaußenwand 8, mit Solarstrom gespeist wird. Der zweite Warmwasserspeicher 12 wird mit Netzstrom gespeist. In der dargestellten Anordnung ist der erste Warmwasserspeicher 2 unter dem zweiten Warmwasserspeicher 12 angeordnet und beide sind mit einer Wasserzuleitung 17 verbunden, wodurch Warmwasser in den zweiten Warmwasserspeicher 12 gelangt. Damit die Zufuhr von Warmwasser stets erfolgen kann, sind beide Warmwasserspeicher 2 und 12 noch mit einer Wasserumlaufleitung verbunden, in die ein Rückschlagventil 19 eingebaut ist das bei Entnahme von Warmwasser durch die Warmwasserleitung 24 und damit bei Zulauf von Kaltwasser aus der Kaltwasserleitung 23 schließt.

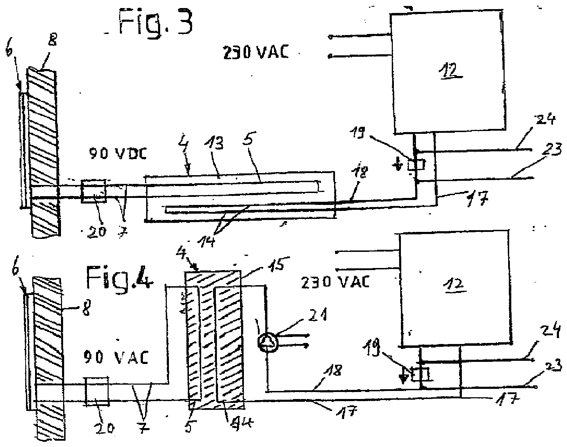

Wie in Fig. 3 wiedergegeben, kann ein Wärmespeicherkörper 4 aus einem Estrichboden 13 bestehen, in den eine elektrische Heizung 5 eingelegt ist, die über die Zuleitungen 7 mit Solarstrom aus der Solarzellenvorrichtung 6 an der Gebäudeaußenwand 8 gespeist wird. Im Estrichboden 13 ist ein Warmwasserrohrregister 14 eingebracht, von dem das Warmwasser in den nachgeschalteten Warmwasserspeicher 12 strömt, das mit Kaltwasser ergänzt wird. Ansonsten ist die Leitungsanordnung wie in Fig. 2 dargestellt, um einen ständigen Kreislauf zwischen dem Warmwasserrohr-register 14 und dem nachgeordneten Warmwasserspeicher 12 zu gestatten.

In Fig. 4 ist eine Raumwand 8 als Wärmespeicherkörper 4 dargestellt, wobei elektrische Heizung 5 und Warmwasserrohrregister 14, sowie der nachgeordnete Warmwasserspeicher 12 in gleicher Weise elektrisch und hydraulisch verschaltet sind, mit der Ausnahme, dass der Wasserumlauf zwischen dem Warmwasserrohrregister 14 und dem nachgeordneten Warmwasserspeicher 12, entsprechend der räumlichen Anordnung, mit einer Umlaufpumpe 21 hergestellt werden muss.

### Bezugszeichenliste

- 2: Warmwasserspeicher, erster
- 3: Heizstab, elektrisch
- 4: Wärmespeicherkörper
- 5: Heizung, elektrisch
- 6: Solarzellenvorrichtung
- 7: Zuleitungen für den Gleichstrom aus der Solarzellenvorrichtung 6
- 8: Gebäudeaußenwand
- 9: Heizstab, elektrisch - oben liegend
- 10: Schaltvorrichtung, regelnd
- 11: Warmwasserthermostat
- 12: Warmwasserspeicher zweiter, nachgeordnet
- 13: Estrichboden als Wärmespeicherkörper 4
- 14: Warmwasserrohrregister
- 15: Raumwand als Wärmespeicherkörper 4
- 16 17: Wasserzuleitung von Warmwasserspeicher 2 zu Warmwasserspeicher 12
- 18: Wasserumlaufleitung zwischen Warmwasserspeicher 2 und Warmwasserspeicher 12
- 19: Rückschlagventil der Wasserumlaufleitung 18
- 20: Überspannungsschutz der Zuleitungen 7
- 21: Umlaufpumpe der Wasserumlaufleitung 18
- 23: Kaltwasserleitung
- 24: Warmwasserleitung

## Patentansprüche

1. Einrichtung zur Warmwasserbereitung für Gebäude, mit einer Gebäudeaußenwand (8), mit einer an der Gebäudeaußenwand (8) angebrachten Solarzellenvorrichtung (6), mit einem ersten Wärmespeicher, der eine erste Heizung (3, 5) aufweist, wobei im Anwendungsfall die erste Heizung (3, 5) mit Gleichstrom niedriger Spannung aus der Solarzellenvorrichtung (6) gespeist wird, wobei der erste Wärmespeicher einen ersten Warmwasserspeicher (2) oder einen Wärmeträgerkörper (4) mit eingebautem Warmwasserrohrregister (14) umfasst, wobei die erste Heizung des ersten Warmwasserspeichers (2) von wenigstens einem ersten Heizstab (3) gebildet ist, und wobei die Einrichtung einen dem ersten Wärmespeicher nachgeordneten, zweiten Wärmespeicher aufweist, der als zweiter Warmwasserspeicher (12) ausgebildet ist, wobei der zweite Warmwasserspeicher (12) eine zweite Heizung umfasst, und bei dem die zweite Heizung von wenigstens einem zweiten Heizstab (9) gebildet ist, der im Anwendungsfall mit Netzstrom gespeist wird, wobei die erste Heizung des ersten Warmwasserspeichers (2) oder des Wärmespeicherkörpers (4) mit eingebautem Warmwasserregister (14), bestehend aus einem Estrichboden (13) oder aus einer Raumwand (15), im Anwendungsfall ausschließlich mit elektrischer Energie aus der an der Gebäudeaußenwand (8) angebrachten Solarzellenvorrichtung (6) über Zuleitungen (7) gespeist wird, während die zweite Heizung des zweiten Warmwasserspeichers (12) ausschließlich an das 230 V- Netz angeschlossen ist, und wobei die Einrichtung weiterhin eine Wasserzuleitung (17), eine Wasserumlaufleitung (18), eine Kaltwasserleitung (23) und eine Warmwasserleitung (24) aufweist, wobei der zweite Warmwasserspeicher (12) mit dem ersten Warmwasserspeicher (2) oder dem Warmwasserregister (14) des Wärmespeicherkörpers (4) über die Wasserzuleitung (17) und die Wasserumlaufleitung (18) verbunden ist, wobei an letztere die Kaltwasserleitung (23) und die Warmwasserleitung (24) angeschlossen sind, wobei zwischen den Anschlussstellen der Kaltwasserleitung (23) und der Warmwasserleitung (24) in die Wasserumlaufleitung (18) ein Rückschlagventil (19) eingebaut ist, das bei Warmwasserentnahme aus der Warmwasserleitung (24) und damit bei einer Kaltwasserzuspeisung über die Kaltwasserleitung (23) schließt.

2. Einrichtung nach Anspruch 1, wobei sie weiterhin einen Durchlauferhitzer aufweist, der dem Warmwasserrohrregister (14) oder dem ersten Warmwasserspeicher (2) nachgeschaltet ist, und der im Anwendungsfall mit Netzstrom oder mit einer anderen Heizenergie, wie Gas, gespeist ist.

3. Einrichtung nach Anspruch 1 oder 2, wobei der erste Warmwasserspeicher (2) und/oder das Warmwasserrohrregister (14) und/oder der zweite Warmwasserspeicher (12) und/oder der Durchlauferhitzer mit einem Warmwasserthermostat versehen ist, der dazu eingerichtet ist, die Einspeisung der elektrischen Energie von der Solarzellenvorrichtung (6) und vom Netz zu regeln.

## Claims

1. Device for hot water generation for buildings having a building external wall (8), having a solar cell apparatus (6) attached to the building external wall (8), having a first heat accumulator which has a first heater (3, 5), wherein, in the specific application, the first heater (3, 5) is fed with direct current of a low voltage from the solar cell apparatus (6), wherein the first heat accumulator comprises a first hot water accumulator (2) or a heat carrier body (4) with a built-in hot water pipe register (14), wherein the first heater of the first hot water accumulator (2) is formed by at least one first heating rod (3) and wherein the device has a second heat accumulator which is disposed downstream of the first heat accumulator and is designed as a second hot water accumulator (12), wherein the second hot water accumulator (12) comprises a second heater, and in which the second heater is formed by at least one second heating rod (9) which, in the specific application, is fed with mains current, wherein the first heater of the first hot water accumulator (2) or of the heat accumulator body (4) with a built-in hot water register (14), consisting of a screed floor (13) or of a room wall (15), is fed in the specific application exclusively with electrical energy from the solar cell apparatus (6), which is attached to the building external wall (8), via supply lines (7), whereas the second heater of the second hot water accumulator (12) is connected exclusively to the 230 V mains, and wherein the device further has a water supply line (17), a water circulation line (18), a cold water line (23) and a hot water line (24), wherein the second hot water accumulator (12) is connected to the first hot water accumulator (2) or the hot water register (14) of the heat accumulator body (4) via the water supply line (17) and the water circulation line (18), wherein the latter has the cold water line (23) and the hot water line (24) connected thereto, wherein between the connection points of the cold water line (23) and the hot water line (24) a non-return valve (19) is installed into the water circulation line (18) and closes when hot water is removed from the hot water line (24) and thus when cold water is supplied via the cold water line (23).

2. Device as claimed in claim 1, wherein it further has a flow heater which is connected downstream of the hot water pipe register (14) or the first hot water accumulator (2) and which, in the specific application, is fed with mains current or with another heating energy, such as gas.

3. Device as claimed in claim 1 or 2, wherein the first hot water accumulator (2) and/or the hot water pipe register (14) and/or the second hot water accumulator (12) and/or the flow heater is provided with a hot water thermostat which is configured to regulate the supply of electrical energy from the solar cell apparatus (6) and from the mains.

## Revendications

1. Installation de production d'eau chaude pour un bâtiment, avec un mur extérieur de bâtiment (8) avec un dispositif de cellules photovoltaïques (6) posé sur le mur extérieur de bâtiment (8), avec un premier accumulateur de chaleur qui présente un premier dispositif de chauffage (3, 5), dans laquelle le premier dispositif de chauffage (3, 5) est alimenté par le courant continu à basse tension du dispositif de cellules photovoltaïques (6) lorsqu'il est utilisé, dans laquelle le premier accumulateur de chaleur comprend un premier réservoir d'eau chaude (2) ou un corps caloporteur (4) avec un registre tubulaire d'eau chaude (14), dans laquelle le premier dispositif de chauffage du premier réservoir d'eau chaude (2) est constitué par au moins une première cartouche chauffante (3), l'installation comportant un deuxième accumulateur de chaleur disposé en aval du premier accumulateur de chaleur qui est configuré comme un deuxième réservoir d'eau chaude (12), le deuxième réservoir d'eau chaude (12) comprenant un deuxième dispositif de chauffage et ce deuxième dispositif de chauffage étant constitué d'au moins une deuxième cartouche chauffante (9) qui est alimentée par le courant du réseau lorsqu'elle est utilisée, dans laquelle le premier dispositif de chauffage du premier réservoir d'eau chaude (2) ou du corps caloporteur (4) avec un registre d'eau chaude intégré (14), constitué par une chape (13) ou par un mur (15), est alimenté, lorsqu'il est utilisé, uniquement par l'énergie électrique du dispositif de cellules photovoltaïques (6) posé sur le mur extérieur de bâtiment (8) par le biais de câbles d'alimentation (7), tandis que le deuxième dispositif de chauffage du deuxième réservoir d'eau chaude (12) est raccordé uniquement au réseau en 230 V, laquelle installation présentant en outre une conduite d'alimentation en eau (17), une conduite de circulation d'eau (18), une conduite d'eau froide (23) et une conduite d'eau chaude (24), le deuxième réservoir d'eau chaude (12) étant relié avec le premier réservoir d'eau chaude (2) ou le registre d'eau chaude (14) du corps caloporteur (4) par la conduite
d'alimentation en eau (17) et la conduite de circulation d'eau (18), la conduite d'eau froide (23) et la conduite d'eau chaude (24) étant raccordées à cette dernière, entre les points de raccordement de la conduite d'eau froide (23) et de la conduite d'eau chaude (24) dans la circulation d'eau (18) étant intégré un clapet anti-retour (19) qui se ferme en cas de prélèvement d'eau chaude de la conduite d'eau chaude (24) et donc d'alimentation en eau froide par la conduite d'eau froide (23).

2. Installation selon la revendication 1, laquelle comporte en outre un chauffeeau instantané qui est connecté en aval du registre tubulaire d'eau chaude (14) ou du premier réservoir d'eau chaude (2) et qui est alimenté, lorsqu'il est utilisé, par le courant du réseau pi une autre énergie de chauffage telle que du gaz.

3. Installation selon la revendication 1 ou 2, dans laquelle le premier réservoir d'eau chaude (2) et/ou le registre tubulaire d'eau chaude (14) et/ou le deuxième réservoir d'eau chaude (12) et/ou le réservoir instantané sont dotés d'un thermostat d'eau chaude qui est destiné à réguler l'alimentation en énergie électrique du dispositif de cellules photovoltaïques (6) et du réseau.
